# EUROPÄISCHE PATENTSCHRIFT

(11) **EP 1 275 978 B1**
(45) Veröffentlichungstag und Bekanntmachung des Hinweises auf die Patenterteilung: **05.10.2005**
(21) Anmeldenummer: 02010394.1
(22) Anmeldetag: 08.05.2002
(51) Int. Cl.: G01S 13/34, G01S 7/35, G01S 7/03

(54) **RPC-Schaltung für Dauerstrichradar**
RPC circuit for continuous wave radar
Circuit RPC pour radar à onde continue

(30) Priorität: 14.07.2001 DE 10134386
(43) Veröffentlichungstag der Anmeldung: 15.01.2003
(73) Patentinhaber: EADS Deutschland GmbH, 81663 München (DE)
(72) Erfinder: Solbach, Klaus, Prof. Dr., 45473 Mühlheim (DE)
(74) Vertreter: Meel, Thomas

(56) Entgegenhaltungen:
- EP-A- 1 046 926
- US-A- 3 233 188
- BEASLEY P D L ET AL: "Solving the problems of a single antenna frequency modulated CW radar" IEEE INTERNATIONAL RADAR CONFERENCE, 7. Mai 1990 (1990-05-07), Seiten 391-395, XP010007512
- QI JIMING ET AL: "Development of a 3 cm band reflected power canceller" 2001 CIE INTERNATIONAL CONFERENCE ON RADAR PROCEEDINGS (CAT NO.01TH8559), 2001 CIE INTERNATIONAL CONFERENCE ON RADAR PROCEEDINGS, BEIJING, CHINA, 15-18 OCT. 2001, Seiten 1098-1102, XP002261033 2001, Piscataway, NJ, USA, IEEE, USA ISBN: 0-7803-7000-7

## Beschreibung

Die Erfindung betrifft ein Dauerstrichradar nach dem Oberbegriff des Anspruchs 1.

Dauerstrichradare umfassen eine Senderschaltung zur Erzeugung von Radarsendesignalen, eine über einen Zirkulator mit der Senderschaltung gekoppelte Sende/Empfangsantenne und eine über den Zirkulator mit der Sende/Empfangsantenne gekoppelte Empfängerschaltung zur Verarbeitung von an der Sende/Empfangsantenne empfangenen Radarechosignalen eines Zielobjekts. Der Zirkulator dient zur Weiterleitung der von der Senderschaltung erzeugten Sendesignale an die Sende/Empfangsantenne und zur Ableitung der von der Sende/Empfangsantenne empfangenen Echosignalen des Zielobjekts an den Eingang der Empfängerschaltung. Eine RPC-Schaltung ist zur Unterdrückung von aus der Senderschaltung und/oder durch Reflexion von der Sende/Empfangsantenne direkt in die Empfängerschaltung abgeleiteten Teilen der Sendesignale in Ansprache auf ein von der Empfängerschaltung abgeleitetes Steuersignal vorgesehen. Die RPC-Schaltung enthält eine in den Signalweg zwischen dem Zirkulator und der Sende/Empfangsantenne geschaltete Reflexions-Modulator-Schaltung zur Erzeugung eines die direkt abgeleiteten Teile des Sendesignals kompensierenden Korrektursignals.

Bei einem bisherigen Konzept war es vorgesehen, das Kompensations- bzw. Korrektursignal über eine Auskopplung am Senderausgang zu gewinnen, über eine Quadratur-Modulator- Schaltung in Amplitude und Phase zu steuern und schließlich über einen Richtkoppler in den zur Empfängerschaltung führenden Signalweg einzuspeisen. Dieses bisherige Konzept hat den Vorteil einer weitgehenden Trennung der eigentlichen Radarschaltung und der RPC-Schaltung als zusätzliche Komponente, ist jedoch aufwendig hinsichtlich der Zahl der Komponenten und ihrer Komplexität, insbesondere der Quadratur-Modulator-Schaltung.

Ein Dauerstrichradar mit einer gemeinsamen Sende- und Empfangsantenne bietet die Möglichkeit, das Kompensations- bzw. Korrektursignal durch eine gesteuerte Reflexionsstelle in der Antennenzuleitung zu erzeugen und so eine Reflexions-Modulator- Schaltung zu bilden. Ein solches Konzept wurde bereits von John D. Harmer, William S. O'Hare, "Some Advances in CW Radar Techniques", Conference Proceedings of Nat. Conv. on Military Electronics, 1961, pp. 311-323 beschrieben. Dort wird ein dreidimensionales Hohlleiterbauelement in Form einer "magischen T-Schaltung" verwendet, das nur in Hohlleitertechnik hergestellt werden kann, wenig geeignet ist für eine Integration der Schaltung und bei dem wegen der Abmessungen in der "magischen T-Schaltung" die beiden Stufen zur Erzeugung des Inphase-Signals und des Quadratur-Signals auf der Verbindungsleitung mit einem Abstand von wesentlich mehr als λ/8 (λ = Wellenlänge auf der Leitung) räumlich versetzt sein müssen. Damit ist eine Verschiebung der Signale um 90° für nur ein kleines Frequenzband realisierbar.

Die Aufgabe der Erfindung ist es ein Dauerstrichradar der eingangs geschilderten Art zu schaffen, die mit auf einfache Weise integrierbaren Komponenten herstellbar ist.

Diese Aufgabe wird durch ein Dauerstrichradar mit den in Anspruch 1 angegebenen Merkmalen gelöst.

Vorteilhafte Weiterbildungen des erfindungsgemäßen Dauerstrichradars sind in den Unteransprüchen gekennzeichnet.

Durch die Erfindung wird ein Dauerstrichradar mit einer Senderschaltung zur Erzeugung von Radarsendesignalen, einer über einen Zirkulator mit der Senderschaltung gekoppelten Sende/Empfangsantenne und einer über den Zirkulator mit der Sende/Empfangsantenne gekoppelten Empfängerschaltung zur Verarbeitung von an der Sende/Empfangsantenne empfangenen Radarechosignalen eines Zielobjekts geschaffen. Der Zirkulator dient zur Weiterleitung der von der Senderschaltung erzeugten Sendesignale an die Sende/Empfangsantenne und zur Ableitung der von der Sende/Empfangsantenne empfangenen Echosignale des Zielobjekts an den Eingang der Empfängerschaltung. Zur Unterdrückung von aus der Senderschaltung und/oder durch Reflexion von der Sende/Empfangsantenne direkt in die Empfängerschaltung abgeleiteten Teilen der Sendesignale in Ansprache auf ein von der Empfängerschaltung abgeleitetes Steuersignal ist eine RPC-Schaltung vorgesehen, die eine in den Signalweg zwischen dem Zirkulator und der Sende/Empfangsantenne geschaltete Reflexions-Modulator-Schaltung zur Erzeugung eines die direkt abgeleiteten Teile des Sendesignals kompensierenden Korrektursignals enthält. Erfindungsgemäß ist es vorgesehen, daß die Reflexions-Modulator-Schaltung eine Richtkoppleranordnung zur Auskopplung eines Teils des den Signalweg zwischen dem Zirkulator und der Sende/Empfangsantenne durchlaufenden Signals und eine an die Richtkoppleranordnung angeschlossene steuerbare Leitungsabschlußanordnung zur Einstellung von Reflexion und/oder Absorption des ausgekoppelten Signals im Sinne einer Erzeugung des Korrektursignals in Ansprache auf das von der Empfängerschaltung abgeleitete Steuersignal enthält.

Ein wesentlicher Vorteil der erfindungsgemäßen Art der Schaltung ist es, daß die Reflexion-Modulator-Schaltung in integrierbarer Weise in verschiedenen Leitungstechniken herstellbar ist. Ein weiterer Vorteil ist es, daß eine Quadratur (90°-Verschiebung von I- und Q-Signalen) über einen breiten Frequenzbereich möglich ist.

Gemäß einer bevorzugten Ausführungsform der Erfindung ist es vorgesehen, daß die Richtkoppleranordnung einen ersten Richtkoppler und einen über diesen mit dem Signalweg zwischen Zirkulator und Sende/Empfangsantenne gekoppelten ersten Leitungszweig zur Auskopplung einer Inphase-Komponente aus diesem Signalweg und einen zweiten Richtkoppler und einen über diesen mit dem Signalweg zwischen Zirkulator und Sende/Empfangsantenne gekoppelten zweiten Leitungszweig zur Auskopplung einer Quadratur-Komponente aus diesem Signalweg enthält, und daß an einem Ende des ersten Leitungszweigs ein erster steuerbarer Leitungsabschluß zur Einstellung von Reflexion und/oder Absorption der ausgekoppelten Inphase- Komponente und an einem Ende des zweiten Leitungszweigs ein zweiter steuerbarer Leitungsabschluß zur Einstellung der Reflexion und/oder Absorption der ausgekoppelten Quadratur- Komponente vorgesehen ist. Die ausgekoppelten Wellen können mittels der steuerbaren Leitungsabschlüsse je nach deren Steuerzustand mit positiver oder negativer Phase reflektiert oder auch völlig absorbiert werden. Die reflektierten Wellen laufen über die Richtkoppler in den Signalweg zwischen Zirkulator und Sende/Empfangsantenne zurück, wo sie um den Koppelfaktor verkleinert auftreten und als reflektierte Wellen rückwärts zum Zirkulator und von dort zum Empfänger laufen und ein unerwünschtes Überkopplungssignal kompensieren können.

Vorzugsweise ist es vorgesehen, daß an dem anderen Ende des ersten Leitungszweigs ein erster Absorber vorgesehen ist, und daß an dem anderen Ende des zweiten Leitungszweigs entsprechend ein zweiter Absorber vorgesehen ist.

Gemäß einer anderen vorteilhaften Ausführungsform der Erfindung ist es vorgesehen, daß die Richtkoppleranordnung einen ersten Richtkoppler zur Aufteilung eines mit dem Zirkulator verbundenen ersten Teils des Signalwegs zwischen Zirkulator und Sende/Empfangsantenne in einen ersten Leitungszweig und einen zweiten Leitungszweig, einen zweiten und dritten Richtkoppler zur Kopplung des ersten und zweiten Leitungszweigs jeweils mit einem dritten und vierten Leitungszweig, sowie einen vierten Richtkoppler zum Zusammenfassen des dritten und vierten Leitungszweigs zu einem mit der Sende/Empfangsantenne verbundenen zweiten Teil des Signalwegs zwischen Zirkulator und Sende/Empfangsantenne enthält, und daß an jeweils einem Ende der Leitungszweige steuerbare Leitungsabschlüsse zur Einstellung von Reflexion und/oder Absorption von Inphase- und Quadratur-Komponenten des aus dem Signalweg ausgekoppelten Signals vorgesehen sind. Diese Ausführungsform macht sich die Eigenschaft von Richtkopplern zu Nutze, daß die ausgekoppelte Welle und die Welle auf der Hauptleitung um 90° phasenverschoben sind, was zum Zwecke der Quadratur und zur Auslöschung von Signalanteilen genutzt werden kann.

Vorzugsweise ist an einem Ende des ersten Leitungszweigs ein steuerbarer Leitungsabschluß vorgesehen und das andere Ende des ersten Leitungszweigs ist mit dem Zirkulator verbunden.

Weiterhin von Vorteil ist es, wenn an einem Ende des vierten Leitungszweigs ein steuerbarer Leitungsabschluß vorgesehen und das andere Ende des vierten Leitungszweigs mit der Sende/ Empfangsantenne verbunden ist.

Vorzugsweise ist an einem Ende des zweiten und dritten Leitungszweigs jeweils ein steuerbarer Leitungsabschluß vorgesehen und am anderen Ende des zweiten und dritten Leitungszweigs jeweils ein Absorber vorgesehen.

Gemäß einer bevorzugten Ausführungsform ist zwischen dem zweiten Richtkoppler und dem dritten Richtkoppler eine Leitungslängendifferenz von λ/8 (λ = Wellenlänge auf der Leitung) vorgesehen, um eine 90°-Verschiebung der im zweiten und dritten Leitungszweig reflektierten Signale zu erreichen.

Vorzugsweise sind die steuerbaren Leitungsabschlüsse jeweils paarweise einander zugeordnet an einem Ende des ersten und dritten Leitungszweigs und an einem Ende des zweiten und vierten Leitungszweigs vorgesehen.

Bei allen Ausführungsformen können die steuerbaren Leitungsabschlüsse durch PIN-Dioden, durch FET-Schaltungen oder durch Varaktor-Dioden gebildet sein.

Im folgenden werden Ausführungsbeispiele der Erfindung anhand der Zeichnung erläutert. Es zeigen:
- Figur 1: ein Blockschaltbild einer Ausführungsform eines Dauerstrichradars zur Erläuterung der Grundzüge der Erfindung;
- Figur 2: ein Schaltbild, welches eine Reflexions-Modulator- Schaltung gemäß einem Ausführungsbeispiel der Erfindung zeigt;
- Figur 3: ein Schaltbild, welches eine Reflexions-Modulator- Schaltung gemäß einem anderen Ausführungsbeispiel der Erfindung zeigt; und
- Figur 4a) und b): Schaltbilder von steuerbaren Leitungsabschlüssen, wie sie in der erfindungsgemäßen Reflexions- Modulator-Schaltung Anwendung finden können.

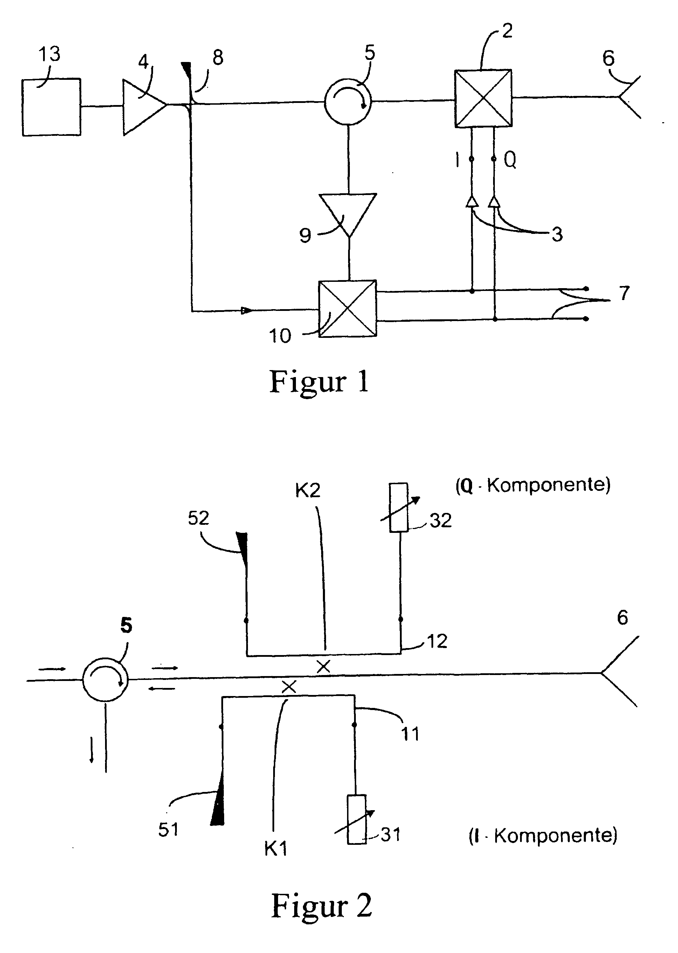

In dem in Figur 1 dargestellten Blockschaltbild bedeutet das Bezugszeichen 13 einen Sender eines frequenzmodulierten Dauerstrichradars. Dem Sender 13 ist eine Verstärker-Endstufe 4 nachgeschaltet. Die aus dem Sender und der Endstufe 4 gebildete Senderschaltung 13, 4 dient zur Erzeugung von Radarsendesignalen, die einer Sende/Empfangsantenne 6 zuführbar sind, welche über einen Zirkulator 5 mit der Senderschaltung 13, 4 gekoppelt ist. Über den Zirkulator 5 ist weiterhin eine Empfängerschaltung 9, 10 mit der Sende/Empfangsantenne 6 gekoppelt. Die Empfängerschaltung 9, 10 umfaßt einen rauscharmen HF-Empfängerverstärker 9 und einen Empfängermischer 10. Die Empfängerschaltung 9, 10 dient der Verarbeitung von an der Sende/Empfangsantenne 6 empfangenen und über den Zirkulator 5 in den Empfängerverstärker 9 eingespeisten Radarechosignalen eines Zielobjekts. Der Zirkulator 5 sorgt einerseits für die Weiterleitung der von der Senderschaltung 13, 4 erzeugten Sendesignale an die Sende/Empfangsantenne 6 und andererseits der Ableitung der von der Sende/Empfangsantenne 6 empfangenen Echosignale des Zielobjekts an den Eingang der Empfängerschaltung 9, 10.

Eine RPC-Schaltung 2, 3 zur Unterdrückung von aus der Senderschaltung 13, 4 durch Überkopplung im Zirkulator 5 und/oder durch Reflexion von der Sende/Empfangsantenne 6 direkt in die Empfängerschaltung 9, 10 abgeleiteten Teilen der Sendesignale umfaßt einen Reflexions- Modulator 2 und zwei Regelverstärker 3, welche an ihren Ausgängen mit I- und Q-Eingängen für ein Inphase-Signal und ein Quadraturphase-Signal am Reflexions-Modulator 2 und an ihren Eingängen mit den Zwischenfrequenzausgängen des Empfängermischers 10 gekoppelt sind. Dem Empfängermischer 10 wird weiterhin ein Teil des Sendesignals zugeführt, welches über einen Richtkoppler 8 aus dem Signalpfad zwischen der Senderschaltung 4, 13 und dem Zirkulator 5 ausgekoppelt wird. Die durch den Reflexions-Modulator 2 und die Regelverstärker 3 gebildete RPC-Schaltung 2, 3 erzeugt in Ansprache auf das von der Empfängerschaltung 9, 10 abgeleitete Steuersignal ein Korrektursignal, welches die von der Senderschaltung 13, 4 durch Überkopplung im Zirkulator 5 direkt in die Empfängerschaltung 9, 10 oder die durch Reflexion von der Sende/Empfangsantenne 6 ohne Abstrahlung durch dieselbe direkt in die Empfängerschaltung 9, 10 abgeleiteten Teile des Sendesignals kompensiert.

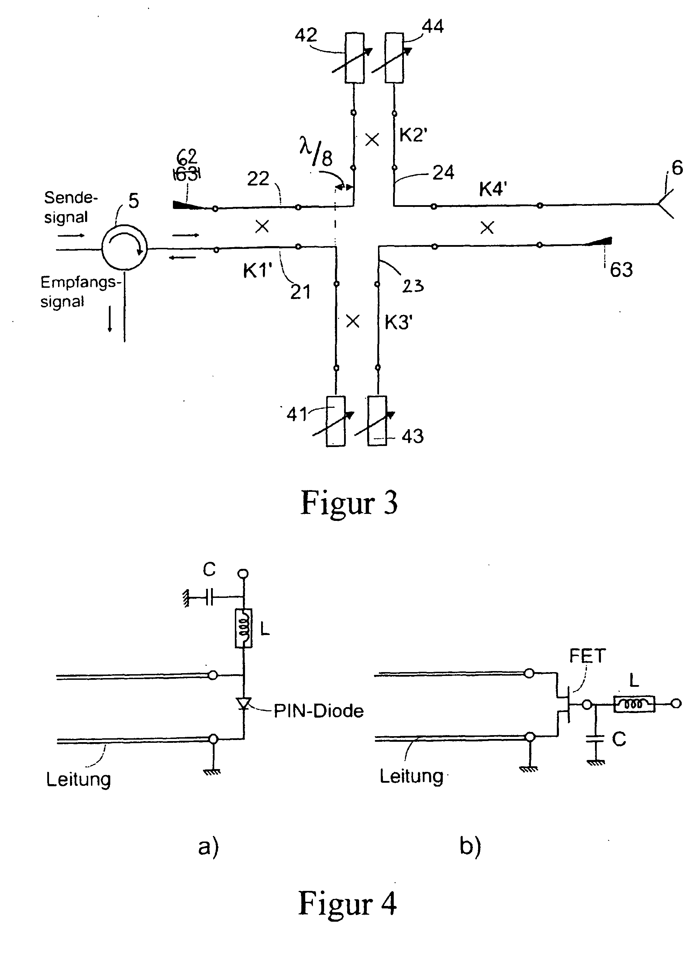

In den Figuren 2 und 3 sind Reflexions-Modulator-Schaltungen 2 gemäß zwei Ausführungsbeispielen der Erfindung dargestellt. Die Reflexions-Modulator-Schaltungen 2 sind in den Signalweg zwischen dem Zirkulator 5 und der Sende/Empfangsantenne 6 des Dauerstrichradars geschaltet. Allgemein gesprochen enthält die Reflexions-Modulator-Schaltung 2 eine Richtkoppleranordnung, nämlich die Richtkoppler K1, K2 bei dem Ausführungsbeispiel von Figur 2 bzw. die Richtkoppler K1', K2', K3', K4' bei dem Ausführungsbeispiel der Figur 3. Diese Richtkoppleranordnung dient der Auskopplung eines Teils des den Signalweg zwischen dem Zirkulator 5 und der Sende/Empfangsantenne 6 durchlaufenden Signals. Weiterhin ist eine an die Richtkoppleranordnung K1, K2; K1', K2', K3', K4' angeschlossene steuerbare Leitungsabschlußanordnung, nämlich zwei steuerbare Leitungsabschlüsse 31, 32 bei dem in Figur 2 dargestellten Ausführungsbeispiel bzw. vier steuerbare Leitungsabschlüsse 41, 42, 43, 44 bei dem in Figur 3 dargestellten Ausführungsbeispiel vorgesehen. Diese Leitungsabschlüsse dienen zur Einstellung von Reflexion und/oder Absorption des aus dem Signalweg zwischen Zirkulator 5 und Sende/Empfangsantenne 6 ausgekoppelten Signals im Sinne der Erzeugung des oben erläuterten Korrektursignals in Ansprache auf ein Steuersignal, welches von der Empfängerschaltung 9, 10 abgeleitet ist.

Bei dem in Figur 2 dargestellten Ausführungsbeispiel enthält die Richtkoppleranordnung K1, K2 im einzelnen einen ersten Richtkoppler K1 und einen über diesen mit dem Signalweg zwischen Zirkulator 5 und der Sende/Empfangsantenne 6 gekoppelten ersten Leitungszweig 11. Der erste Richtkoppler K1 dient zusammen mit dem ersten Leitungszweig 11 zur Auskopplung einer Inphase-Komponenten I aus dem Signalweg zwischen Zirkulator 5 und Sende/Empfangsantenne 6. Weiterhin enthält die Reflexions-Modulator-Schaltung 2 einen zweiten Richtkoppler K2 und einen über diesen mit dem Signalweg zwischen Zirkulator 5 und der Sende/Empfangsantenne 6 gekoppelten zweiten Leitungszweig 12. Der zweite Richtkoppler K2 und der zweite Leitungszweig 12 dienen zur Auskopplung einer Quadratur- Komponente Q aus dem Signalweg zwischen dem Zirkulator 5 und der Sende/Empfangsantenne 6. An einem Ende des ersten Leitungszweigs 11 ist ein erster steuerbarer Leitungsabschluß 31 vorgesehen und an einem Ende des zweiten Leitungszweigs 12 ist ein zweiter steuerbarer Leitungsabschluß 32 vorgesehen. Die beiden steuerbaren Leitungsabschlüsse 31, 32 dienen zur Einstellung von Reflexion und/oder Absorption der ausgekoppelten Inphase- Komponente I bzw. der ausgekoppelten Quadraturphase-Komponente Q. An dem jeweiligen anderen Ende des ersten Leitungszweigs 11 bzw. des zweiten Leitungszweigs 12 ist ein jeweiliger erster Absorber 51 bzw. zweiter Absorber 52 vorgesehen.

Die beiden Richtkoppler K1 und K2 sind um λ/8 (λ = Wellenlänge auf der Leitung) versetzt. Das von dem Zirkulator 5 zur Sende/Empfangsantenne 6 verlaufende Sendesignal bzw. das in Gegenrichtung verlaufende von der Sende/Empfangsantenne 6 ohne Abstrahlung reflektierte Signal wird zu einem Teil entsprechend dem Koppelfaktor durch die Richtkoppler K1, K2 auf den ersten Leitungszweig 11 (Inphase-Komponente I) bzw. auf den zweiten Leitungszweig 12 (Quadraturphase-Komponente Q) ausgekoppelt. An den an den Enden der beiden Leitungszweige 11, 12 vorgesehenen steuerbaren Leitungsabschlüssen 31 bzw. 32 werden die ausgekoppelten Wellen je nach dem Steuerzustand der steuerbaren Leitungsabschlüssen 31, 32 mit positiver oder negativer Phase reflektiert oder ganz oder teilweise absorbiert, je nach dem Verhältnis von Wellenwiderstand und Widerstand des steuerbaren Leitungsabschlusses 31 bzw. 32. Die reflektierten Wellen laufen in die Richtkoppler K1, K2 zurück, wo sie um den Koppelfaktor verkleinert wieder auf dem Signalweg zwischen Zirkulator 5 und Sende/Empfangsantenne 6 auftreten und als reflektierte Wellen rückwärts zum Zirkulator 5 und von dort zu der Empfängerschaltung 9, 10 laufen und das unerwünschte Überkopplungssignal kompensieren können.

Durch die Verschiebung der beiden Richtkoppler K1, K2 um λ/8 auf der Hauptleitung treten die beiden reflektierten Wellen um 90° gegeneinander verschoben (Quadratur) auf der Hauptleitung, d.h. dem Signalweg zwischen Zirkulator 5 und Sende/Empfangsantenne 6 auf. Bei einer Frequenzänderung von z.B. 5% tritt dann erst ein Fehler von etwa 0,45° auf.

Die steuerbaren Leitungsabschlüsse 31, 32, wie sie an sich aus dem Stand der Technik für verschiedenste Leitungstypen, wie Hohlleiter oder Mikrostreifenleitung bekannt sind, können beispielsweise unter Verwendung von PIN-Dioden, wie in Figur 4a) gezeigt, oder beispielsweise unter Verwendung einer FET-Schaltung, wie in Figur 4b) gezeigt, realisiert werden. Bei den beiden in Figur 4a) und b) gezeigten Ausführungsbeispielen wird die Steuerspannung USteuer über ein Entkopplungsnetzwerk L-C zugeführt.

Bei dem in Figur 3 dargestellten zweiten Ausführungsbeispiel der erfindungsgemäßen Reflexions-Modulator-Schaltung 2 enthält die Richtkoppleranordnung einen ersten Richtkoppler K1' zur Aufteilung eines mit dem Zirkulator 5 verbundenen ersten Teils des Signalwegs zwischen Zirkulator 5 und Sende/Empfangsantenne 6 in einen ersten Leitungszweig 21 und einen zweiten Leitungszweig 22. Ein zweiter und ein dritter Richtkoppler K2', K3' ist an dem ersten Leitungszweig 21 und an dem zweiten Leitungszweig 22 vorgesehen und koppelt diese jeweils mit einem dritten Leitungszweig 23 bzw. einem vierten Leitungszweig 24. Ein weiterhin vorgesehener vierter Richtkoppler K4' ist so angeordnet, daß er den dritten Leitungszweig 23 und den vierten Leitungszweig 24 zu einem mit der Sende/Empfangsantenne 6 verbundenen zweiten Teil des Signalwegs zwischen Zirkulator 5 und Antenne 6 zusammenfaßt. An jeweils einem Ende der Leitungszweige 21, 22, 23, 24 sind steuerbare Leitungsabschlüsse 41, 42, 43, 44 vorgesehen, welche zur Einstellung von Reflexion und/oder Absorption von Inphase- und Quadraturphase-Komponenten I, Q des aus dem Signalweg ausgekoppelten Signals dienen. An dem einen Ende des ersten Leitungszweigs 21 ist ein steuerbarer Leitungsabschluß 41 vorgesehen, das andere Ende des ersten Leitungszweigs 21 ist mit dem Zirkulator 5 verbunden. In ähnlicher Weise ist an dem einen Ende des vierten Leitungszweigs 24 ein steuerbarer Leitungsabschluß 44 vorgesehen und das andere Ende des vierten Leitungszweigs 24 mit der Sende/Empfangsantenne 6 verbunden. An dem einen Ende des zweiten und dritten Leitungszweigs 22, 23 ist jeweils ein steuerbarer Leitungsabschluß 42, 43 vorgesehen und an dem anderen Ende des zweiten und dritten Leitungszweigs 22, 23 ist jeweils ein Absorber 62, 63 vorgesehen. Zwischen dem zweiten Richtkoppler K2' und dem dritten Richtkoppler K3' ist eine Leitungslängendifferenz von λ/8 (λ = Wellenlänge auf der Leitung) vorgesehen, um eine 90°-Verschiebung der im zweiten und dritten Leitungszweig 22, 23 reflektierten Signale zu erreichen. Die steuerbaren Leitungsabschlüsse 41, 42, 43, 44 sind jeweils paarweise einander zugeordnet an einem Ende des ersten und dritten Leitungszweigs 21, 23 bzw. an einem Ende des zweiten und vierten Leitungszweigs 22, 24 vorgesehen.

Die Funktion der in Figur 3 dargestellten Richtkoppleranordnung macht sich die Eigenschaft von Richtkopplern zu Nutze, daß die ausgekoppelte Welle und die Welle auf der Hauptleitung um 90° phasenverschoben sind. Bei Kopplern mit -3 dB Koppelfaktor kann dies in symmetrischen Anordnung zu einer Auslöschung von Signalanteilen genutzt werden. Bei der in Figur 3 dargestellten Schaltung wird das vom Zirkulator 5 her einlaufende Sendesignal zunächst im Koppler K1' auf den ersten Leitungszweig 21 und den zweiten Leitungszweig 22 aufgeteilt. Darauf wird jedes Teilsignal über den zweiten Richtkoppler K2' bzw. den dritten Richtkoppler K3' auf den dritten bzw. vierten Leitungszweig 23, bzw. 24 gegeben. Durch Einfügung einer Leitungslängendifferenz von λ/8 zwischen dem ersten Leitungszweig 21 und dem zweiten Leitungszweig 22 sind die jeweiligen Teilwellen um 45° verschoben. Durch den zwischen den dritten Leitungszweig 23 und dem vierten Leitungszweig 24 vorgesehen vierten Richtkoppler K4' werden die beiden Teilwellen wieder summiert und zum Ausgangstor der Richtkoppleranordnung geführt, welches mit der Sende/Empfangsantenne 6 verbunden ist. Die Arbeitsweise der Schaltung ist im wesentlichen vom Zustand der vier steuerbaren Leitungsabschlüsse 41, 42, 43, 44 abhängig. Falls die Abschlüsse jeweils paarweise gleich sind und den Reflexionsfaktorbetrag 1 aufweisen, werden die an den Kopplern von K1' her einfallenden Wellen vollständig nach K4' weitergegeben, und es treten keine reflektierten Wellen auf. Sind die paarweisen Leitungsabschlüsse 41, 42, bzw. 43, 44 ungleich eingestellt, werden Teile des Signals reflektiert und es entsteht eine rücklaufende Teilwelle, welche über den Richtkoppler K1' zum Zirkulator 5 und über diesen zur Empfangsschaltung 9, 10 zurückgeführt wird, wobei die beiden in den ersten und zweiten Leitungszweig 21, 22 reflektierten Teilsignale um 90° gegeneinander verschoben sind (I- und Q-Signale).

Die steuerbaren Leitungsabschlüsse 41, 42, 43, 44 können durch die bereits beschriebenen PIN-Dioden- oder FET-Schaltungen gemäß Figur 4a) bzw. b) verwirklicht werden. Auch kommen Varaktor-Dioden- Schaltungen in Betracht. Darüber hinaus sind Leitungsschaltungen mit steuerbarem Eingangsreflexionsfaktor, vorzugsweise mit Betrag nahe 1 und variabler Phase möglich, d.h. Reflexions-Phasenschieber, beispielsweise in Form eines ferritgefüllten Hohlleiters mit Kurzschluß an einem Ende und einer Magnetisierungsspule mit Stromsteuerung. Daneben sind Leitungsstrukturen mit einer Vielzahl von diskreten Varaktor- oder PIN-Dioden oder mit verteilt integrierten Diodenstrukturen verwendbar, oder Leitungen mit elektrisch steuerbarem dielektrischem Material (Ferroelektrika) bis zu elektro-mechanisch gesteuerten Leitungen und Leitungselementen (Mikrosystemtechnik). Elemente dieser Art sind an sich dem Stande der Technik bekannt.

### Bezugszeichenliste

- 2, 3: RPC-Schaltung
- 2: Modulator
- 3: Regelverstärker
- 4: Endstufe
- 5: Zirkulator
- 6: Sende/Empfangsantenne
- 7: ZF-Signale
- 8: erster Richtkoppler
- 9: Empfängerverstärker
- 10: Empfängermischer
- K1,K2: Richtkoppler
- K1',K2',K3',K4': Richtkoppler
- 11, 12: Leitungszweig
- 21, 22, 23, 24: Leitungszweig
- 31, 32: steuerbarer Leitungsabschluß
- 41, 42, 43, 44: steuerbarer Leitungsabschluß
- 51, 52: Absorber
- 62, 63: Absorber

## Patentansprüche

1. Dauerstrichradar mit einer Senderschaltung (4, 13) zur Erzeugung von Radarsendesignalen, einer über einen Zirkulator (5) mit der Senderschaltung (4, 13) gekoppelten Sende/Empfangsantenne (6) und einer über den Zirkulator (5) mit der Sende/Empfangsantenne (6) gekoppelten Empfängerschaltung (9, 10) zur Verarbeitung von an der Sende/Empfangsantenne (6) empfangenen Radarechosignalen eines Zielobjekts, wobei der Zirkulator (5) zur Weiterleitung der von der Senderschaltung (4, 13) erzeugten Sendesignale an die Sende/Empfangsantenne (6) und zur Ableitung der von der Sende/Empfangsantenne (6) empfangenen Echosignalen des Zielobjekts an den Eingang der Empfängerschaltung (9, 10) dient, und mit einer RPC-Schaltung (2, 3) zur Unterdrückung von aus der Senderschaltung (4, 13) und/oder durch Reflexion von der Sende/Empfangsantenne (6) direkt in die Empfängerschaltung (9, 10) abgeleiteten Teilen der Sendesignale in Ansprache auf ein von der Empfängerschaltung (9, 10) abgeleitetes Steuersignal, die eine in den Signalweg zwischen dem Zirkulator (5) und der Sende/Empfangsantenne (6) geschaltete Reflexions-Modulator-Schaltung (2) zur Erzeugung eines die direkt abgeleiteten Teile des Sendesignals kompensierenden Korrektursignals enthält, **dadurch gekennzeichnet, daß** die Reflexions-Modulator-Schaltung (2) eine Richtkoppleranordnung (K1, K2; K1', K2', K3', K4') zur Auskopplung eines Teils des den Signalweg zwischen den Zirkulator (5) und der Sende/Empfangsantenne (6) durchlaufenden Signals und eine an die Richtkoppleranordnung (K1, K2; K1', K2', K3', K4') angeschlossene steuerbare Leitungsabschlußanordnung (31, 32; 41, 42, 43, 44) zur Einstellung von Reflexion und/oder Absorption des ausgekoppelten Signals im Sinne der Erzeugung des Korrektursignals in Ansprache auf das von der Empfängerschaltung (9, 10) abgeleitete Steuersignal enthält.

2. Dauerstrichradar nach Anspruch 1, **dadurch gekennzeichnet, daß** die Richtkoppleranordnung (K1, K2) einen ersten Richtkoppler (K1) und einen über diesen mit dem Signalweg zwischen Zirkulator (5) und Sende/Empfangsantenne (6) gekoppelten ersten Leitungszweig (11) zur Auskopplung einer Inphase-Komponente (I) aus diesem Signalweg und einen zweiten Richtkoppler (K2) und einen über diesen mit dem Signalweg zwischen Zirkulator (5) und Sende/Empfangsantenne (6) gekoppelten zweiten Leitungszweig (12) zur Auskopplung einer Quadratur-Komponente (Q) aus diesem Signalweg enthält, und daß an einem Ende des ersten Leitungszweigs (11) ein erster steuerbarer Leitungsabschluß (31) zur Einstellung von Reflexion und/oder Absorption der ausgekoppelten Inphase-Komponente (I) und an einem Ende des zweiten Leitungszweigs (12) ein zweiter steuerbarer Leitungsabschluß (32) zur Einstellung der Reflexion und/oder Absorption der ausgekoppelten Quadratur-Komponente (Q) vorgesehen ist.

3. Dauerstrichradar nach Anspruch 2, **dadurch gekennzeichnet, daß** an dem anderen Ende des ersten Leitungszweigs (11) ein erster Absorber (51) vorgesehen ist, und daß an dem anderen Ende des zweiten Leitungszweigs (12) ein zweiter Absorber (52) vorgesehen ist.

4. Dauerstrichradar nach Anspruch 1, **dadurch gekennzeichnet, daß** die Richtkoppleranordnung (K1', K2', K3', K4') einen ersten Richtkoppler (K1') zur Aufteilung eines mit dem Zirkulator (5) verbundenen ersten Teils des Signalwegs zwischen Zirkulator (5) und Sende/Empfangsantenne (6) in einen ersten Leitungszweig (21) und in einen zweiten Leitungszweig (22), einen zweiten und dritten Richtkoppler (K2', K3') zur Kopplung des ersten und zweiten Leitungszweigs (21, 22) jeweils mit einem dritten und vierten Leitungszweig (23, 24), sowie einen vierten Richtkoppler (K4') zum Zusammenfassen des dritten und vierten Leitungszweigs (23, 24) zu einem mit der Sende/Empfangsantenne (6) verbundenen zweiten Teil des Signalwegs zwischen Zirkulator (5) und Sende/Empfangsantenne (6) enthält, und daß an jeweils einem Ende der Leitungszweige (21, 22, 23, 24) steuerbare Leitungsabschlüsse (41, 42, 43, 44) zur Einstellung von Reflexion und/oder Absorption von Inphase- und Quadratur- Komponenten (I, Q) des aus dem Signalweg ausgekoppelten Signals vorgesehen sind.

5. Dauerstrichradar nach Anspruch 4, **dadurch gekennzeichnet, daß** an einem Ende des ersten Leitungszweigs (21) ein steuerbarer Leitungsabschluß (41) vorgesehen und das andere Ende des ersten Leitungszweigs (21) mit dem Zirkulator (5) verbunden ist.

6. Dauerstrichradar nach Anspruch 4 oder 5, **dadurch gekennzeichnet, daß** an einem Ende des vierten Leitungszweigs (24) ein steuerbarer Leitungsabschluß (44) vorgesehen und das andere Ende des vierten Leitungszweigs (24) mit der Sende/ Empfangsantenne (6) verbunden ist.

7. Dauerstrichradar nach Anspruch 4, 5 oder 6, **dadurch gekennzeichnet, daß** an einem Ende des zweiten und dritten Leitungszweigs (22, 23) jeweils ein steuerbarer Leitungsabschluß (42, 43) vorgesehen und am anderen Ende des zweiten und dritten Leitungszweigs (22, 23) jeweils ein Absorber (62, 63) vorgesehen ist.

8. Dauerstrichradar nach einem der Ansprüche 4 bis 7, **dadurch gekennzeichnet, daß** zwischen dem zweiten Richtkoppler (K2') und dem dritten Richtkoppler (K3') eine Leitungslängendifferenz von λ/8 (λ=Wellenlänge auf der Leitung) vorgesehen ist, um eine 90°-Verschiebung der im zweiten und dritten Leitungszweig (22, 23) reflektierten Signale zu erreichen.

9. Dauerstrichradar nach einem der Ansprüche 4 bis 8, **dadurch gekennzeichnet, daß** die steuerbaren Leitungsabschlüsse (41, 42, 43, 44) jeweils paarweise einander zugeordnet an einem Ende des ersten und dritten Leitungszweigs (21, 23) und an einem Ende des zweiten und vierten Leitungszweigs (22, 24) vorgesehen sind.

10. Dauerstrichradar nach einem der Ansprüche 1 bis 9, **dadurch gekennzeichnet, daß** die steuerbaren Leitungsabschlüsse (31, 32; 41, 42, 43, 44) durch PIN-Dioden gebildet sind.

11. Dauerstrichradar nach einem der Ansprüche 1 bis 9, **dadurch gekennzeichnet, daß** die steuerbaren Leitungsabschlüsse (31, 32; 41, 42, 43, 44) durch FET-Schaltungen gebildet sind.

12. Dauerstrichradar nach einem der Ansprüche 1 bis 9, **dadurch gekennzeichnet, daß** die steuerbaren Leitungsabschlüsse (31, 32,; 41, 42, 43, 44) durch Varaktor-Dioden gebildet sind.

13. Dauerstrichradar nach einem der Ansprüche 1 bis 12, **dadurch gekennzeichnet, daß** die Richtkoppler (K1, K2; K1', K2', K3', K4') in Hohlleitertechnik mit durch Löcher in den Hohlleiterwänden gekoppelten Leitungen gebildet sind.

14. Dauerstrichradar nach einem der Ansprüche 4 bis 13, **dadurch gekennzeichnet, daß** die zweiten und dritten Richtkoppler (K2', K3') durch "magische T-Schaltungen" gebildet sind.

## Claims

1. Continuous-wave radar having a transmitter circuit (4, 13) for production of radar transmission signals, having a transmitting/receiving antenna (6) which is coupled via a circulator (5) to the transmitter circuit (4, 13), and having a receiver circuit (9, 10) which is coupled via the circulator (5) to the transmitting/receiving antenna (6) for processing of radar echo signals which are received at the transmitting/receiving antenna (6) from a target object, with the circulator (5) being used to pass on the transmission signals, which have been produced by the transmitter circuit (4, 13), to the transmitting/receiving antenna (6) and for emitting the echo signals which have been received by the transmitting/receiving antenna (6) from the target object to the input of the receiver circuit (9, 10), and having an RPC circuit (2, 3) for suppression of parts of the transmission signals which have been emitted from the transmitter circuit (4, 13) and/or by reflection from the transmitting/receiving antenna (6) directly to the receiver circuit (9, 10) in response to a control signal which is emitted from the receiver circuit (9, 10), which RPC circuit (2, 3) contains a reflection modulator circuit (2), which is connected in the signal path between the circulator (5) and the transmitting/receiving antenna (6), for production of a correction signal which compensates the directly emitted parts of the transmission signal, **characterized in that** the reflection modulator circuit (2) contains a direction coupler arrangement (K1, K2: K1', K2', K3', K4') for outputting a part of the signal which passes through the signal path between the circulator (5) and the transmitting/receiving antenna (6), and containing a controllable line terminating arrangement (31, 32; 41, 42, 43, 44), which is connected to the directional coupler arrangement (K1, K2: K1', K2', K3', K4'), for adjusting the reflection and/or absorption of the output signal in the sense of production of the correction signal in response to the control signal which is emitted from the receiver circuit (9, 10).

2. Continuous-wave radar according to Claim 1, **characterized in that** the directional coupling arrangement (K1, K2) contains a first directional coupler (K1) and a first line branch (11), which is coupled via this first directional coupler (K1) to the signal path between the circulator (5) and the transmitting/receiving antenna (6), for outputting an in-phase component (I) from this signal path, and contains a second directional coupler (K2) and a second line branch (12) which is coupled via this second directional coupler (K2) to the signal path between the circulator (5) and the transmitting/receiving antenna (6), for outputting a quadrature component (Q) from this signal path, and **in that** a first controllable line termination (31) is provided at one end of the first line branch (11) for adjusting the reflection and/or absorption of the output in-phase component (I) and a second controllable line termination (32) is provided at one end of the second line branch (12) for adjusting the reflection and/or absorption of the output quadrature component (Q).

3. Continuous-wave radar according to Claim 2, **characterized in that** a first absorber (51) is provided at the other end of the first line branch (11), and **in that** a second absorber (52) is provided at the other end of the second line branch (12).

4. Continuous-wave radar according to Claim 1, **characterized in that** the directional coupler arrangement (K1', K2', K3', K4') contains a first directional coupler (K1') for splitting a first part of the signal path, which is connected to the circulator (5), between the circulator (5) and the transmitting/receiving antenna (6) into a first line branch (21) and into a second line branch (22), a second and a third directional coupler (K2', K3') for coupling the first and the second line branch (21, 22) to a respective third and fourth line branch (23, 24), as well as a fourth directional coupler (K4') for combination of the third and the fourth line branch (23, 24) to form a second part of the signal path, which is connected to the transmitting/receiving antenna (6), between the circulator (5) and the transmitting/receiving antenna (6), and **in that** controllable line terminations (41, 42, 43, 44) are provided at a respective end of the line branches (21, 22, 23, 24) for adjusting the reflection and/or absorption of the in-phase and quadrature components (I, Q) of the signal which is emitted from the signal path.

5. Continuous-wave radar according to Claim 4, **characterized in that** a controllable line termination (41) is provided at one end of the first line branch (21), and the other end of the first line branch (21) is connected to the circulator (5).

6. Continuous-wave radar according to Claim 4 or 5, **characterized in that** a controllable line termination (44) is provided at one end of the fourth line branch (24) and the other end of the fourth line branch (24) is connected to the transmitting/receiving antenna (6).

7. Continuous-wave radar according to Claim 4, 5 or 6, **characterized in that** a respective controllable line termination (42, 43) is provided at one respective end of the second and third line branches (22, 23), and an absorber (62, 63) is provided at the respective other end of the second and third line branches (22, 23).

8. Continuous-wave radar according to one of Claims 4 to 7, **characterized in that** a line length difference of λ/8 (λ = wavelength on the line) is provided between the second directional coupler (K2') and the third directional coupler (K3') in order to achieve a 90° shift between the signals which are reflected in the second and the third line branch (22, 23).

9. Continuous-wave radar according to one of Claims 4 to 8, **characterized in that** the controllable line terminations (41, 42, 43, 44) are provided, in each case associated with one another in pairs, at one end of the first and third line branches (21, 23) and at one end of the second and fourth line branches (22, 24).

10. Continuous-wave radar according to one of Claims 1 to 9, **characterized in that** the controllable line terminations (31, 32; 41, 42, 43, 44) are formed by PIN diodes.

11. Continuous-wave radar according to one of Claims 1 to 9, **characterized in that** the controllable line terminations (31, 32; 41, 42, 43, 44) are formed by FET circuits.

12. Continuous-wave radar according to one of Claims 1 to 9, **characterized in that** the controllable line terminations (31, 32; 41, 42, 43, 44) are formed by varactor diodes.

13. Continuous-wave radar according to one of Claims 1 to 12, **characterized in that** the directional coupler (K1, K2; K1', K2', K3', K4') are formed using waveguide technology with lines which are coupled through holes in the waveguide walls.

14. Continuous-wave radar according to one of Claims 4 to 13, **characterized in that** the second and third directional couplers (K2', K3') are formed by 'magic-T circuits'.

## Revendications

1. Radar à onde continue avec un circuit d'émetteur (4, 13) pour la production de signaux d'émission radar, une antenne émettrice/réceptrice (6) couplée par un circulateur (5) au circuit d'émetteur (4, 13) et un circuit de récepteur (9, 10) couplé par le circulateur (5) à l'antenne émettrice/réceptrice (6) pour le traitement de signaux d'écho radar d'un objet cible reçus par l'antenne émettrice/réceptrice (6), dans lequel le circulateur (5) sert pour la transmission des signaux d'émission produits par le circuit d'émetteur (4, 13) à l'antenne émettrice/réceptrice (6) et pour la dérivation des signaux d'écho de l'objet cible reçus par l'antenne émettrice/réceptrice (6) à l'entrée du circuit de récepteur (9, 10), et avec un circuit RPC (2, 3) pour la suppression de parties des signaux d'émission dérivées du circuit d'émetteur (4, 13) et/ou par réflexion de l'antenne émettrice/réceptrice (6) directement dans le circuit de récepteur (9, 10) en réponse à un signal de commande dérivé du circuit de récepteur (9, 10), qui contient un circuit de modulateur à réflexion (2) placé sur le chemin du signal entre le circulateur (5) et l'antenne émettrice/réceptrice (6) pour produire un signal de correction compensant les parties directement dérivées du signal d'émission, **caractérisé en ce que** le circuit de modulateur à réflexion (2) comprend un dispositif de coupleurs directifs (K1, K2; K1', K2', K3', K4') pour le découplage d'une partie du signal parcourant le chemin de signal entre le circulateur (5) et l'antenne émettrice/réceptrice (6) et un dispositif de terminaisons de ligne (31, 32; 41, 42, 43, 44) réglables raccordé au dispositif de coupleurs directifs (K1, K2; K1', K2', K3', K4') pour le réglage de la réflexion et/ou de l'absorption du signal découplé dans le sens de la production du signal de correction en réponse au signal de commande dérivé du circuit de récepteur (9, 10).

2. Radar à onde continue selon la revendication 1, **caractérisé en ce que** le dispositif de coupleurs directifs (K1, K2) contient un premier coupleur directif (K1) et une première branche de ligne (11) couplée par celui-ci au chemin de signal entre le circulateur (5) et l'antenne émettrice/réceptrice (6) pour le découplage d'une composante en phase (I) hors de ce chemin de signal et un deuxième coupleur directif (K2) et une deuxième branche de ligne (12) couplée par celui-ci au chemin de signal entre le circulateur (5) et l'antenne émettrice/réceptrice (6) pour le découplage d'une composante en quadrature de phase (Q) hors de ce chemin de signal, et **en ce qu'**il est prévu à une extrémité de la première branche de ligne (11) une première terminaison de ligne réglable (31) pour le réglage de la réflexion et/ou de l'absorption de la composante en phase (I) découplée et à une extrémité de la deuxième branche de ligne (12) une deuxième terminaison de ligne réglable (32) pour le réglage de la réflexion et/ou de l'absorption de la composante en quadrature de phase (Q) découplée.

3. Radar à onde continue selon la revendication 2, **caractérisé en ce qu'**il est prévu à l'autre extrémité de la première branche de ligne (11) un premier absorbeur (51) et **en ce qu'**il est prévu à l'autre extrémité de la deuxième branche de ligne (12) un deuxième absorbeur (52).

4. Radar à onde continue selon la revendication 1, **caractérisé en ce que** le dispositif de coupleurs directifs (K1', K2', K3', K4') contient un premier coupleur directif (K1') pour la division d'une première partie, raccordée au circulateur (5), du chemin de signal entre le circulateur (5) et l'antenne émettrice/réceptrice (6) en une première branche de ligne (21) et une deuxième branche de ligne (22), un deuxième et un troisième coupleurs directifs (K2', K3') pour le couplage de la première et de la deuxième branches de ligne (21, 22) respectivement avec une troisième et une quatrième branches de ligne (23, 24), ainsi qu'un quatrième coupleur directif (K4') pour réunir la troisième et la quatrième branches de ligne (23, 24) en une deuxième partie, raccordée à l'antenne émettrice/réceptrice (6), du chemin de signal entre le circulateur (5) et l'antenne émettrice/réceptrice (6), et **en ce qu'**il est prévu à chacune des extrémités des branches de ligne (21, 22, 23, 24) des terminaisons de ligne réglables (41, 42, 43, 44) pour le réglage de la réflexion et/ou de l'absorption de composantes en phase et en quadrature de phase (I,Q) du signal découplé hors du chemin de signal.

5. Radar à onde continue selon la revendication 4, **caractérisé en ce qu'**il est prévu à une extrémité de la première branche de ligne (21) une terminaison de ligne réglable (41) et l'autre extrémité de la première branche de ligne (21) est raccordée au circulateur (5).

6. Radar à onde continue selon la revendication 4 ou 5, **caractérisé en ce qu'**il est prévu à une extrémité de la quatrième branche de ligne (24) une terminaison de ligne réglable (44) et l'autre extrémité de la quatrième branche de ligne (24) est raccordée à l'antenne émettrice/réceptrice (6).

7. Radar à onde continue selon la revendication 4, 5 ou 6, **caractérisé en ce qu'**il est prévu à une extrémité de la deuxième et de la troisième branches de ligne (22, 23) respectivement une terminaison de ligne réglable (42, 43) et il est prévu à l'autre extrémité de la deuxième et de la troisième branches de ligne (22, 23) respectivement un absorbeur (62, 63).

8. Radar à onde continue selon l'une quelconque des revendications 4 à 7, **caractérisé en ce qu'**il est prévu entre le deuxième coupleur directif (K2') et le troisième coupleur directif (K3') une différence de longueur de ligne de λ/8 (λ = longueur d'onde sur la ligne), afin d'atteindre un décalage de 90° des signaux réfléchis dans la deuxième et la troisième branches de ligne (22, 23).

9. Radar à onde continue selon l'une quelconque des revendications 4 à 8, **caractérisé en ce que** les terminaisons de ligne réglables (41, 42, 43, 44) chaque fois associées par paires l'une à l'autre sont prévues à une extrémité de la première et de la troisième branches de ligne (21, 23) et à une extrémité de la deuxième et de la quatrième branches de ligne (22, 24).

10. Radar à onde continue selon l'une quelconque des revendications 1 à 9, **caractérisé en ce que** les terminaisons de ligne réglables (31, 32; 41, 42, 43, 44) sont formées par des diodes PIN.

11. Radar à onde continue selon l'une quelconque des revendications 1 à 9, **caractérisé en ce que** les terminaisons de ligne réglables (31, 32; 41, 42, 43, 44) sont formées par des circuits FET (transistor à effet de champ).

12. Radar à onde continue selon l'une quelconque des revendications 1 à 9, **caractérisé en ce que** les terminaisons de ligne réglables (31, 32; 41, 42, 43, 44) sont formées par des diodes varactor.

13. Radar à onde continue selon l'une quelconque des revendications 1 à 12, **caractérisé en ce que** les coupleurs directifs (K1, K2; K1', K2', K3', K4') sont formés par la technique des conducteurs creux avec des lignes couplées à travers des trous dans les parois des conducteurs creux.

14. Radar à onde continue selon l'une quelconque des revendications 4 à 13, **caractérisé en ce que** le deuxième et le troisième coupleurs directifs (K2', K3') sont formés par des "circuits T hybrides".
